# EUROPEAN PATENT APPLICATION

(11) **EP 1 983 482 A2**
(43) Date of publication of application: **22.10.2008**
(21) Application number: 07109006.2
(22) Date of filing: 25.05.2007
(51) Int. Cl.: G06Q 30/00

(54) **Method and system for providing interactive multimedia services in particular for the promotion of products and services**

(30) Priority: 26.05.2006 IT PD20060212
(71) Applicant: Be Food S.r.l., 25050 Paderno Franciacorta (BS) (IT)
(72) Inventor: Bottini, Bruno, 25030, LOGRATO (BS) (IT)
(74) Representative: Montevecchi, Emma

(57) **Abstract**

A method is described for providing interactive multimedia services, in particular for the promotion of products and services, comprising the stages of transmitting a first flow (4) of multimedia data according to the logic of a pre-programmed schedule and contents in a first database (5), in a video terminal; associating with each of a plurality of products, one or more multimedia data held in a second database (9) stored in the internal memory of the said terminal; interrupting the transmission of the first flow (4) of pre-programmed data by activating an interactive selection means (8) connected to the at least one terminal via one of the plurality of products; presenting on the screen (17) in the terminal a second flow of multimedia data selected interactively from the second database (9) corresponding to one of the plurality of products. A system operating according to the above-mentioned method is also described.

## Description

The present invention concerns a method for providing interactive multimedia services according to the characteristics described in the precharacterising clauses of main claims 1 and 2.

It also relates to a system operating according to the said method.

The method and related system are used in the sector of the promotion of products and services, with particular although not exclusive application in the large-scale retail sector.

Within the technical field of the invention, multimedia information services transmitted on video channels have usually been used in passive modes, not enabling a potential user of the service to control the times, methods and contents of the presentation.

The above-mentioned characteristics are mainly subject to the logic of the service provider who, from a control station, transmits the flow of multimedia data relating to a pre-programmed schedule to a service user terminal having a purely receiving and decoding function.

From this terminal, for example from a terminal in a large-scale retail outlet, the final user is not able to extrapolate information in a manner that is interactive and meets his requirements.

The problem that lies at the heart of the present invention is to make available a method of providing interactive multimedia services in particular for the promotion of products and services, as well as a system operating according to this method, structurally and operationally designed to overcome the above-described limits as regards the known state of the art.

This problem is solved by the present invention by means of a method and system operating according to this method, having the characteristics described in the claims below.

Further features and advantages of the invention will emerge from the following detailed description of a preferred embodiment thereof which is shown by way of a non-limiting example in the accompanying drawings, in which:
- Figure 1 is a main flow chart showing the method of the present invention;
- Figure 2 is a preferred embodiment of a system operating according to the method shown in Fig. 1;
- Figure 3 is a preferred embodiment of an architectural diagram of the system shown in Fig. 2;
- Figures 4A-4C show three preferred embodiments of client terminals according to the present invention;
- Figure 5 shows an embodiment of the structure of the images displayed on the screen of the client terminal according to the invention;
- Figures 6A-6Eter show a first preferred embodiment of the operation of a client terminal according to the invention;
- Figures 7A-7N show a second preferred embodiment of the operation of a client terminal according to the invention.

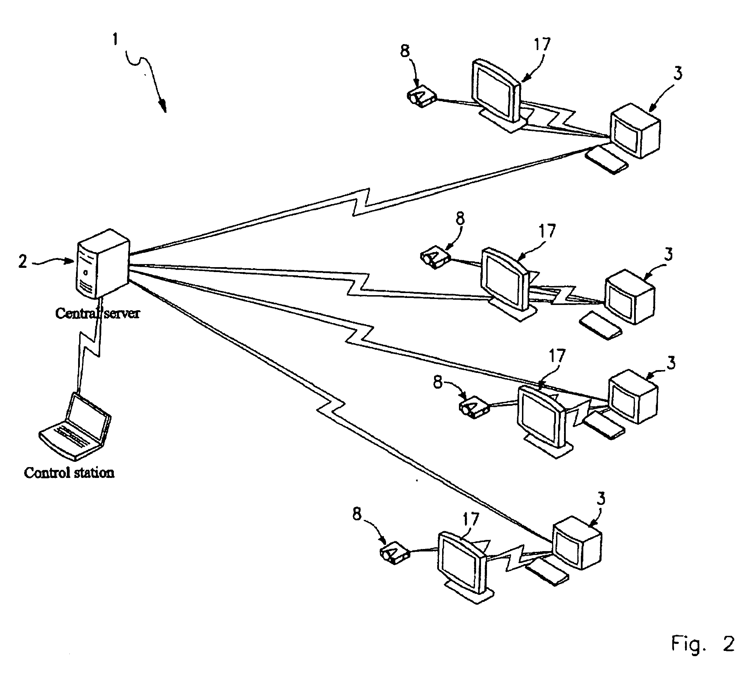

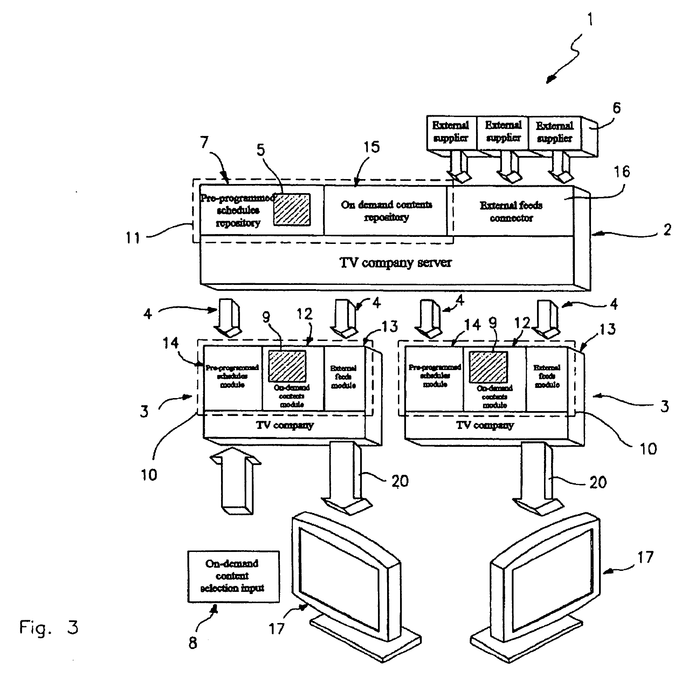

Referring initially to Figures 2 and 3, 1 indicates as a whole a system for providing interactive multimedia services operating according to the method described in the present invention.

System 1 comprises a terminal 2, preferably a video terminal, operating in server mode and installed near a service control station.

The server terminal 2 is responsible for transmitting a first flow 4 of multimedia data to at least one terminal 3, preferably including a screen or monitor 17, operating in client mode and located in a service user station. It is understood that the number of client terminals 3 is absolutely arbitrary and may be any number, depending on the requirements of the user who installs the system operating according to the method described in the invention. The client terminal 3 is connected to the server terminal 2 via a wireless or cable connection.

The first flow 4 of multimedia data transmitted by the server terminal 2 usually comprises textual data and/or images in any type of format, for example jpeg, and/or video data, for example in flash format, and is extracted from a first database 5 of multimedia data stored in the internal memory of the server terminal 2, according to the logic of a pre-programmed schedule.

When receiving, the client terminal 3 is connected to the server terminal 2 and is capable of decoding the flow of data 4 and presenting it on the screen according to the pre-programmed schedule logic.

In detail, the flow of data 4 can be defined as a pre-set time sequence of messages offered by the server terminal 2 to all of the client terminals 3 to which it is connected. The content of the flow of data 4 may be arbitrary and set on request, depending on the user's requirements. Consequently, it can be a standard television schedule or a sequence of proprietary advertising clips relating, for example, to the user's industrial activity which is continually reproduced cyclically and displayed on the monitor 17.

According to a main characteristic of the invention, the client terminal 3 is connected to a means of interactive selection 8, by means of which it is possible to interrupt the transmission of the first flow of data 4 and to activate a video presentation of data selected by the service user.

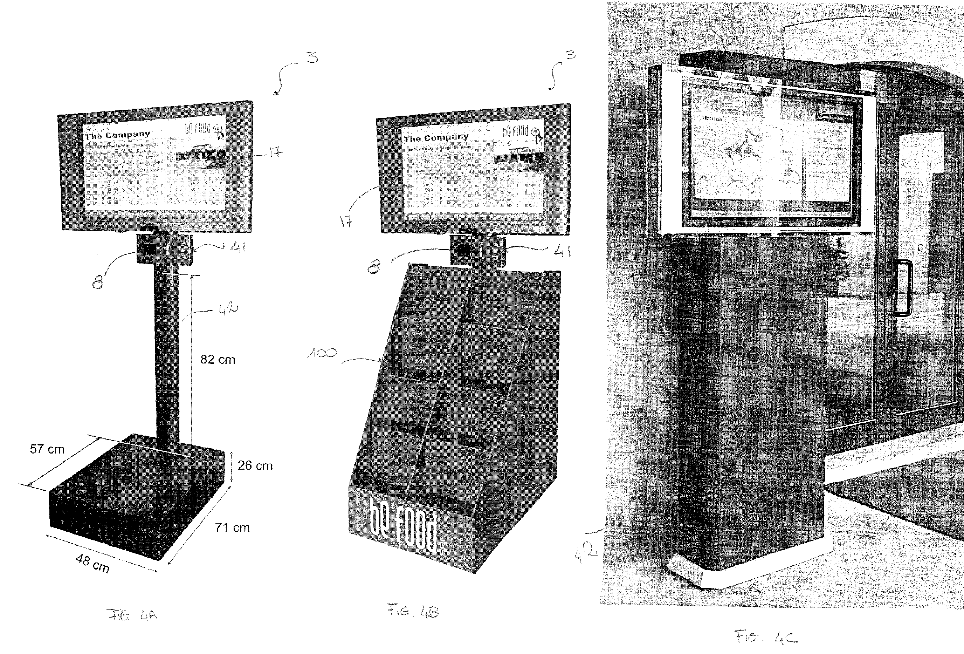

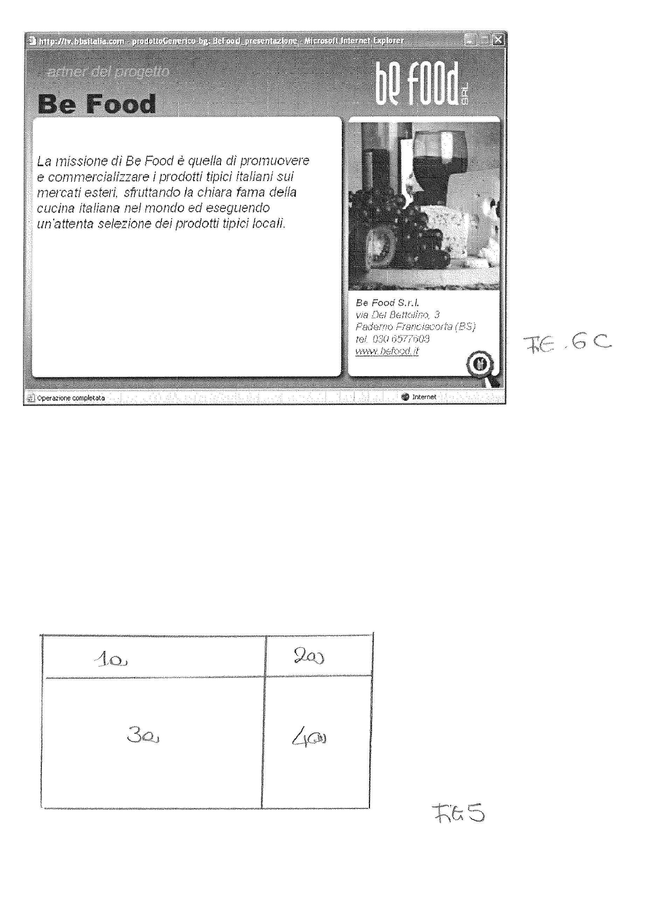

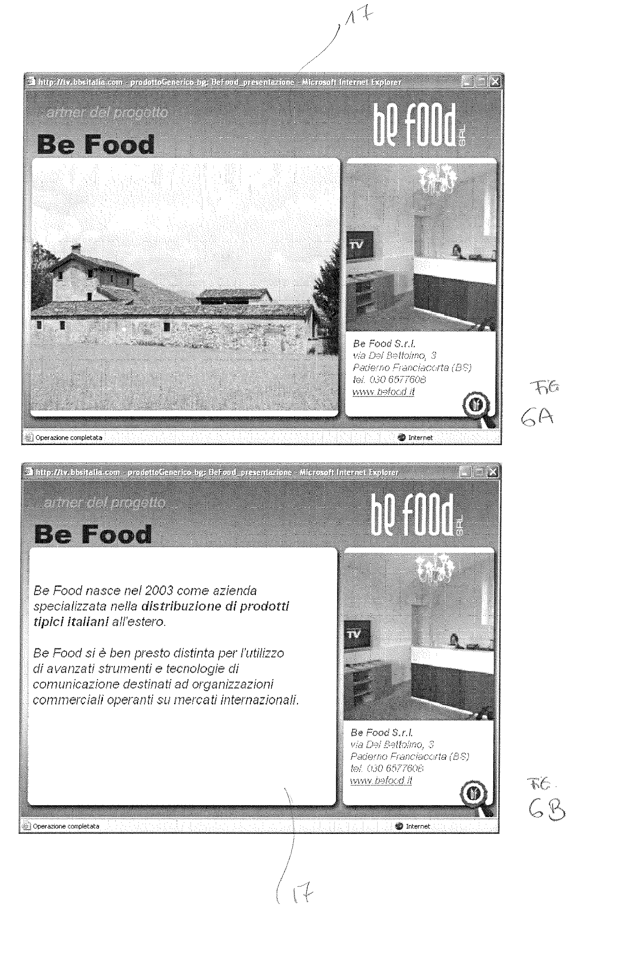

The means of interaction 8 is preferably a barcode scanner (as shown in Figure 2) and/or an RFID (Radio Frequency Identification) code reader and/or a language-selection or multilingual keyboard 41 (see Figures 4A and 4B), located, for example, beneath the screen 17 of the client terminal 3. The present invention, however, covers other means of interaction positioned in any location.

According to preferred embodiments, the video screen 17 connected to the client terminal 3 is in turn located near a product display case with shelves 100 (shown in Figure 4B) or fixed permanently to a wall of any section of a sales point. The client terminal 3 can also be used outdoors. On the screen 17, receiving data from the client terminal 3, the first flow 4 and alternatively a second flow of data selected by the service user and requested via the interactive means 8 is displayed as described in detail below.

Advantageously, the interactivity of the service is ensured by a pre-set association between a product code, a barcode or a code that can be entered via the multilingual keyboard 41, and a flow of multimedia data 20 extracted from a second database 9 stored in the internal memory of the client terminal 3. In particular, in the second database 9 each product that can be recognised by the interactive means 8 is associated with a special flow of multimedia data (the flow of data may be limited to data that are in the form of images only, or video only, or audio only or any combination thereof and others). Thus, each product is associated with a flow of data 20 which is displayed on the screen 17.

The term "product" means not only the product as a physical entity such as any goods on sale or on display in the large-scale retail outlet, but also any accessory to the product that bears the identification details of the product that can be identified by the interactive means 8 (for example postcards or advertising leaflets bearing a bar code).

The application of the invention is not, however, limited to large-scale retail outlets: system 1 can also be used for the presentation of tourist, cultural, cinematic or other schedules in which, on passing, for example, a barcode printed on playbills, brochures, etc. in front of the interaction means 8, information relating to the service in question (travel, tourist itinerary, description and plot of the film, etc.) is obtained.

In detail, for example in multiplex cinemas, the system 1 (not shown in the preferred embodiment described) will have a keyboard with a certain number of paired keys; each pair of keys refers to a film (already showing or scheduled to be shown) and by pressing a first key, duly marked, it will be possible to see the relative trailer, while pressing the second will display a window containing write-ups and/or reviews. Thus on the monitor 17, which normally displays the first flow of general data 4 relating to the cinema programme, the window/trailer relating to a specific film will instead appear on demand when requested by the user by using the appropriate keys serving as interactive means 8.

Similarly, in a bookshop, the first flow of data 4 may relate to information on the month's new books and be transmitted cyclically, the week's new books can be displayed, for example, on the shelved unit 100, each book with its own identifying bar code printed on the cover, and when one of the bar codes is passed in front of the interactive means 8, the flow 4 is interrupted and the specific trailer for the chosen book is displayed as well as an extract of a paragraph or information relating to the book's author.

Figures 4A to 4C show three preferred embodiments of client terminals 3, adapted to indoor (Figures 4A and 4B) and outdoor (Figure 4C) use.

The screen 17 of the client terminal 3, fixed to one end of a column element 42 so that it can be positioned at a pre-set height, can be of any size, but preferably it measures 42, 50 or 63 inches.

In the preferred embodiment shown in Figure 4B, the shelved unit 100 allows items of public interest to be placed on it, both specific products and brochures, so that they can be easily passed in front of the interactive selection means 8 by the interested user in order to interrupt the flow of data 4 of a pre-programmed schedule and to display specific data on the product in the user's hand.

Consequently, the interruption occurs, for example, simply by passing a product in front of the interaction means 8 without the need for further interactions with the terminal 3; further interactions with the system covered by the invention may exist, for example asking for a security password that must be keyed in to display some contents relating to specific products. The second flow of data 20 may have whatever content is desired and may, for example, relate to nutritional or product-use information, information on price, recipes relating to the product, advertising material, etc.

The database 9 can be configured and updated in wireless mode, via a cable, by CD ROM, mass storage such as a USB pen or through any other updating technique known within the sector. Thus the data that can be displayed on the screen 17 can be continually deleted, changed or updated at the request of the large-scale retailer or controller of the services who has installed the system covered by the invention.

The system 1 also includes a first executable programme 10 that can be downloaded directly into the memory of the client terminal 3 which comprises a first software code module 12 for the interactive selection of multimedia data required by the client, a second software code module 13 for configuring and updating the second database 9 containing the data belonging to a second flow 20 as detailed above and a third software code module 14 for receiving and decoding the first flow of data 4.

Similarly, the system 1 comprises a second executable programme 11 that can be directly downloaded into the internal memory of the server terminal 2 which includes a fourth and fifth software code module, shown respectively by 7 and 15, for controlling and transmitting data of the first database 5 and transmitting data to update the database 9 in wireless mode, via a cable or another system known within the sector.

The server terminal 2 also comprises a connector 16 for acquiring data from any external devices 6 that may be connected.

In another embodiment, not shown, the system covered by the invention does not comprise a client terminal 3 and a server terminal 2 connected together, but only one terminal in whose memory are stored the first and second databases 5, 9 from which a first or a second flow of data is alternatively displayed. In particular, in this single terminal, to which the interactive selection means 8 is connected, the first flow of data 4 is displayed and when the user activates the means of selection 8, this first flow is interrupted and the second flow is displayed on the screen.

The operation of the system 1 according to the method described in the present invention is as follows.

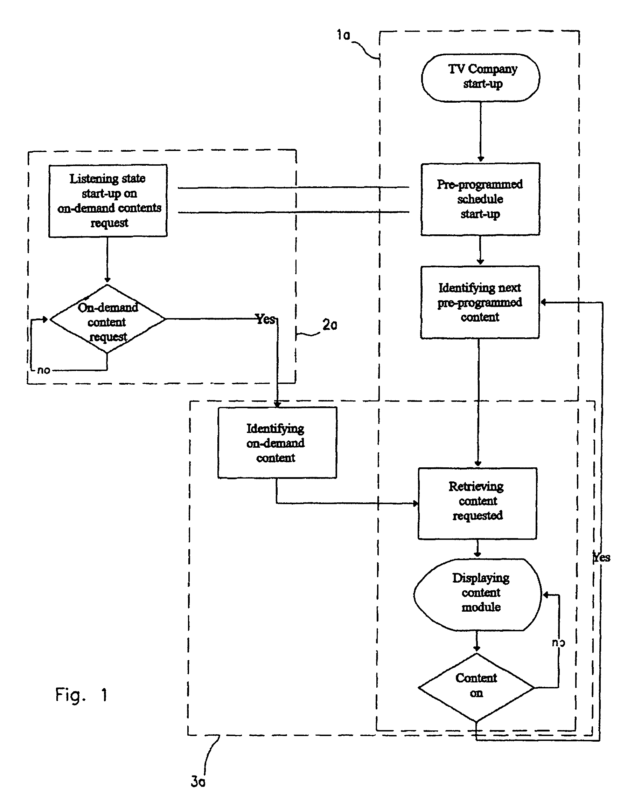

In a first stage 1a of the method covered by the invention, shown schematically in Figure 1, the terminal operating in server mode 2 at the control station of the service is actively transmitting the flow of data 4. The flow of data 4 is extracted from the first database 5, stored in the internal memory of the server terminal 2 and selected by the fourth software module 7 according to the logic of a pre-programmed schedule.

This flow 4 is decoded by the third software module 14 and displayed as a video (for example on the video screen 17) by the terminal operating in client mode 3 at the station where the service is being used.

Stage 2a corresponding to the interruption of the transmission of the first flow of data 4 of the pre-programmed schedule is started up by the user via the interactive selection means 8, for example by a barcode scanner reading a barcode, possibly accompanied by keying in a code on a multilingual keyboard or by pressing a single key. The input thus received by the client terminal 3 corresponds to starting up phase 3a of presenting the content selected in interactive mode, or to the software module 12 extracting a second flow of multimedia data from the second database 9 stored in the internal memory of the client terminal 3.

Subsequently, the presentation of the second flow of multimedia data selected from the second database 9 is activated on the screen 17 of the client terminal 3 until its completion.

In the absence of further interactions through the interactive selection means 8, phase 1a of transmitting the first flow of data 4 according to the logic of the pre-programmed schedule is restarted.

Modifications in the case of there being just one terminal are obvious, namely, there is no transmission of data between the server and client terminal and the updates are made in the only available terminal by means of a CD ROM or any other accessible and preferably portable memory (for example a USB pen).

In another embodiment, not shown, the system 1 also comprises a surveillance device including one or more surveillance cameras capable of viewing the monitor 17 of the one or more client terminals 3 connected to the server 2. These dedicated surveillance cameras therefore allow the status of the various monitors 17 to be seen, from a station located near the server terminal 2 for example, so that the existence or otherwise of a failure thereof can be viewed from the station. In this way it is possible to detect remotely if a monitor is faulty/switched off and arrange for it to be replaced quickly.

In addition, the surveillance device includes sensors to detect electrical or transmission faults inside the system 1 and in particular in the communication of data between the server terminal 2 and the client terminal/s 3.

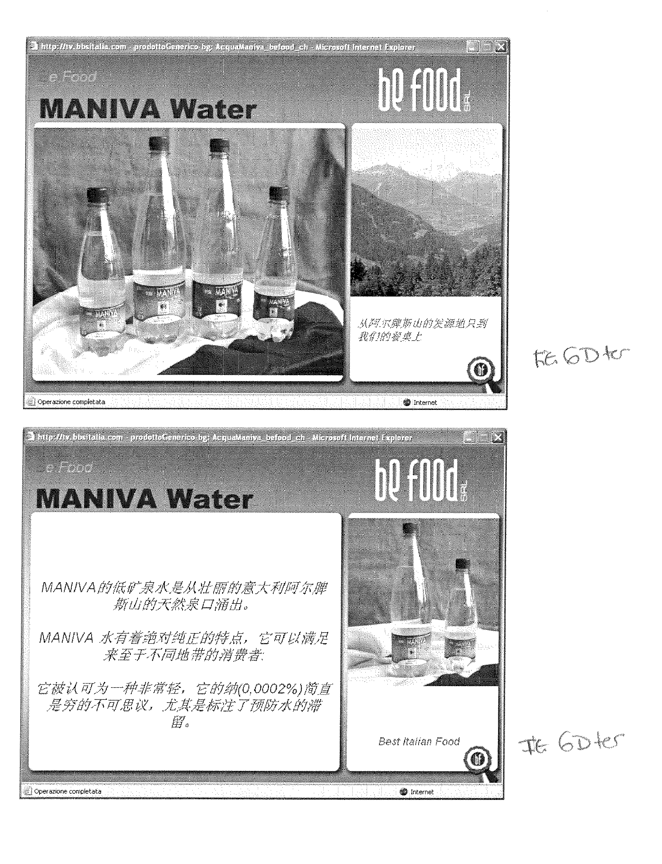

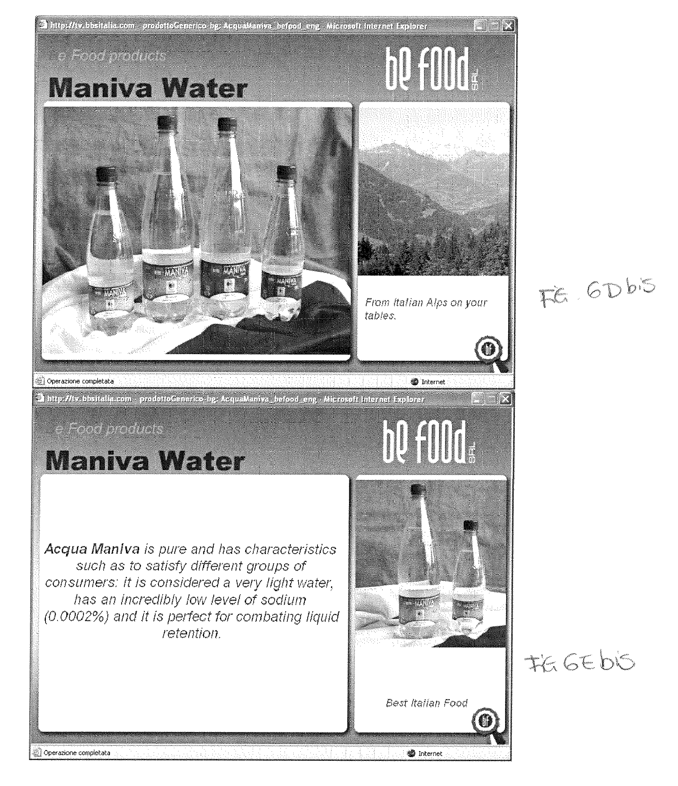

The structure of the images displayed on the monitor 17 of the client terminal 3 is shown in Figure 5: the monitor is divided into different "areas", each identified below by an identification number followed by the suffix "a". For example, there are areas for the "title" 1a, "logo" 2a of the company or organisation requesting the installation of the system 1 according to the invention, the "central area" 3a which displays the flows of data 4, 20 which may be static images, advertising clips or text or a combination thereof, and a "sub-heading" 4a in which an image can be advertised.

A flow of data 4 for a general product begins with a sequence of images having the structure shown in Figure 5 in which the title and logo remain substantially unchanged, while the central area and the sub-heading vary depending on the structure of the typical pre-programmed schedule of the data of the flow 4. Captions can also be inserted in each or some of the images. If a video is being shown in the central area 3a, preferably the sub-heading stays fixed for the entire duration of the advertising clip.

### Example 1

A first flow of data 4, shown in images 6A to 6C, relates to the history of the company applying for this patent. The images succeed one another, for example in the typical way of a slide show presentation on a computer, and are displayed on the monitor 17. At the end of the sequence of images of the flow 4, the sequence starts again from the beginning and repeats itself.

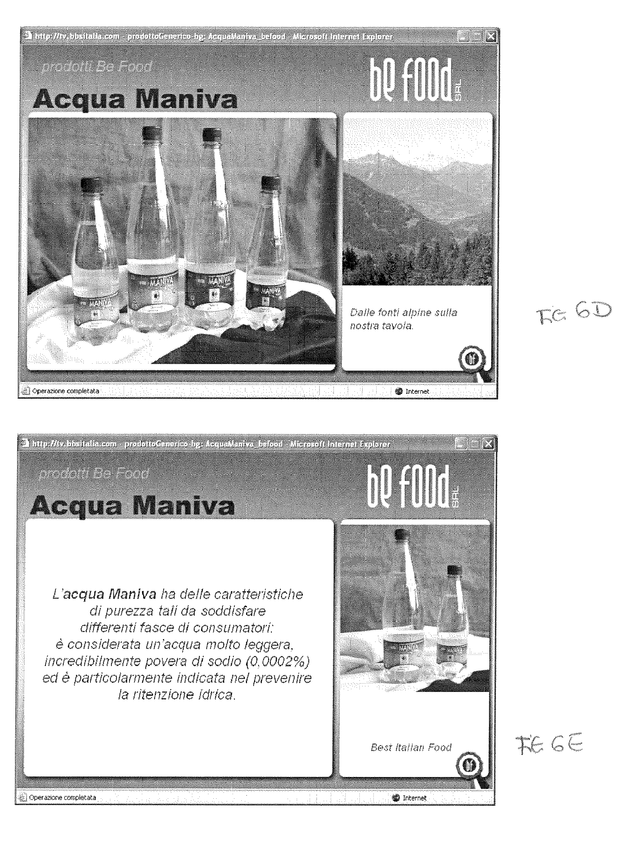

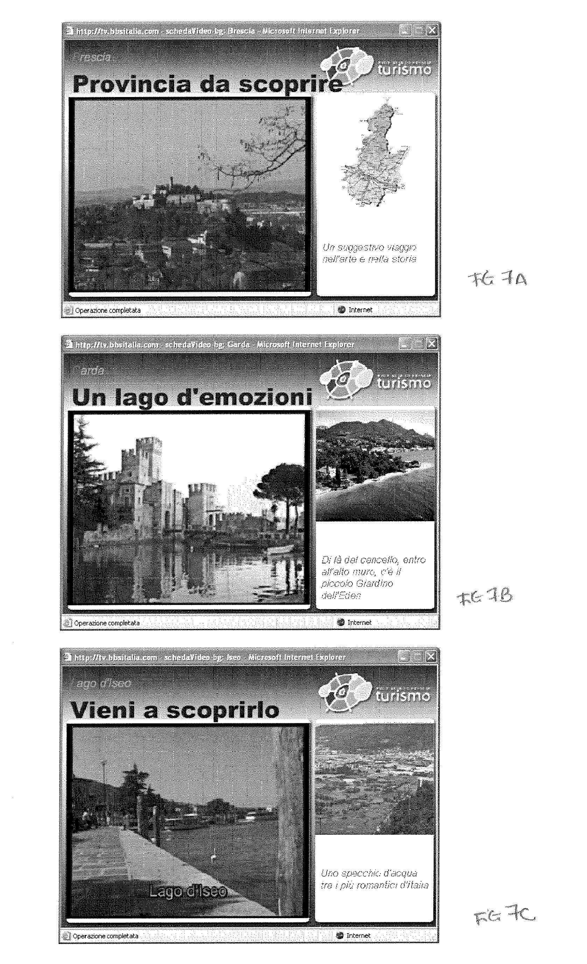

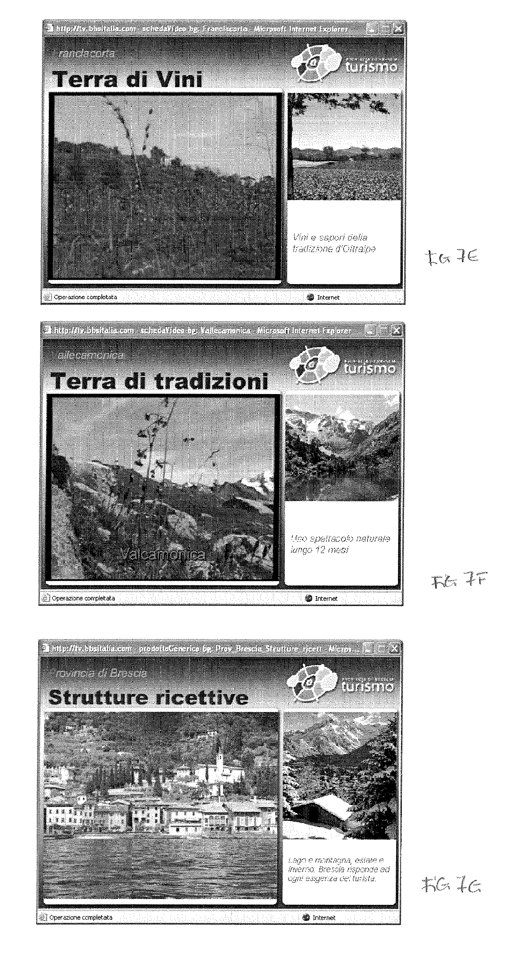

When a bottle of water (that could be available for example on one of the shelves of unit 100) is passed in front of the interactive selection means 8 of the client terminal 3, the flow 4 is interrupted and the images shown in Figures 6D-6E relating to the characteristics of the product concerned appear on the monitor 17, as a new flow of "on demand" data 20.

By means of a button on the terminal 3, it is possible to select the language in which the images relating to the product is displayed: these languages can be, for example, Italian (Figures 6D-6E), English (Figures 6Dbis-6Ebis) or Chinese (Figures 6Dter-6Eter).

### Example 2

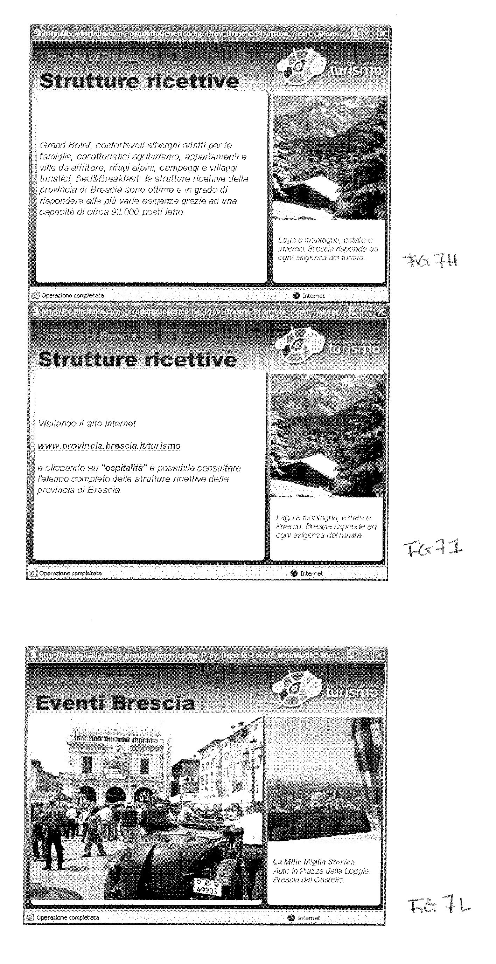

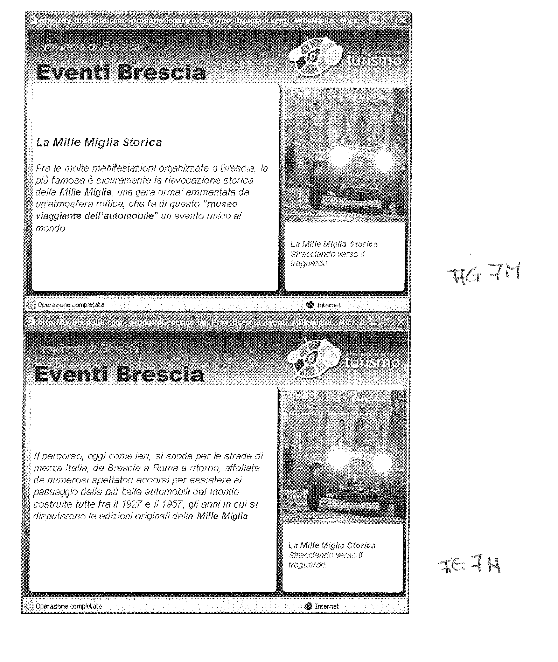

A State organisation, for example the Province of Brescia, uses the client terminal 3 to display information relating to its territory. The flow of data 4 (some examples of this flow are given by the images shown in Figures 7A-7I) therefore relates to the territory and characteristics of the Province of Brescia. Near terminal 3, there are leaflets or brochures relating to specific exhibitions or events that are taking place in the Province. When one of these leaflets is passed in front of the selection means 8, the first flow of data 4 is interrupted and a second flow 20 is displayed on the screen 17. The second flow of data shown in Figures 7L-7N relates to the "Mille Miglia" race about which the user has requested more information.

The information displayed on terminal 3 comes, for example, from the same Province of Brescia site, and the client terminal 3 receives these flows of data through an Internet connection.

The present invention thus solves the problem described, while at the same time offering numerous advantages, including the possibility of creating specific schedules for individual points of sale, containing the costs of production, distribution and control of the service and, in any event, overcoming the barriers of availability of the Internet service in places where this service is not available.

## Claims

1. Method for providing interactive multimedia services, in particular for the promotion of products and services, **characterised in that** it comprises the stages of:
- transmitting a first flow (4) of multimedia data according to the logic of a pre-programmed schedule and contents in a first database (5), in a terminal;
- associating to each of a plurality of products, one or more multimedia data held in a second database (9) stored in the internal memory of the said terminal;
- interrupting the transmission of the said first flow (4) of pre-programmed data by activating an interactive selection means (8) connected to the said at least one terminal, via one of the said plurality of products;
- presenting on the screen (17) in the said terminal a second flow of multimedia data selected interactively from the said second database (9) corresponding to the said one of the said plurality of products.

2. Method for providing interactive multimedia services, in particular for the promotion of products and services, **characterised in that** it comprises the stages of:
- transmitting a first flow (4) of multimedia data according to the logic of a pre-programmed schedule and contents in a first database (5), by means of a connection from a terminal operating in server mode (2) to at least one terminal (3) operating in client mode;
- associating to each of a plurality of products, one or more multimedia data held in a second database (9) stored in the internal memory of the said client terminal (3);
- interrupting the transmission of the said first flow (4) of pre-programmed data by activating an interactive selection means (8) connected to the said at least one client terminal (3), via one of the said plurality of products;
- presenting on the screen (17) in the said client terminal (3) a second flow of multimedia data selected interactively from the said second database (9) corresponding to the said one of the said plurality of products.

3. Method for providing interactive multimedia services according to claim 2, wherein the said connection between the said terminal operating in server mode (2) and the said at least one terminal operating in client mode (3) is of the wireless or cable type.

4. Method for providing interactive multimedia services according to either claim 2 or claim 3, wherein the second database (9) is capable of being configured and/or updated in wireless mode.

5. Method for providing interactive multimedia services according to one or more of the preceding claims, wherein the said second database (9) is capable of being configured and updated via a cable.

6. Method for providing interactive multimedia services according to one or more of the preceding claims, wherein the said second database (9) is capable of being configured and updated by CD ROM.

7. Method for providing interactive multimedia services according to one or more of the preceding claims, wherein text and/or image multimedia data in jpeg and/or flash video format are stored in the said first (5) and/or second (9) database.

8. Method for providing interactive multimedia services according to one or more of claims 2 to 7, wherein the said first database (5) is stored in the internal memory of the said server terminal (2).

9. System (1) for providing interactive multimedia services comprising a terminal including a first database (5) of multimedia data, **characterised in that** it comprises, connected to the said terminal, an interactive selection means (8) of a second flow of multimedia data from a second database (9), stored in the internal memory of the said terminal, operating according to the method referred to in claim 1.

10. System (1) for providing interactive multimedia services comprising a terminal operating in server mode (2) including a first database (5) of multimedia data, a connection between the said server terminal (2) and at least one terminal operating in client mode (3), **characterised in that** it comprises, connected to the said at least one client terminal (3), an interactive selection means (8) for a second flow of multimedia data from a second database (9), stored in the internal memory of the said at least one client terminal (3), operating according to the method referred to in claim 2.

11. System (1) for providing interactive multimedia services according to either claim 9 or claim 10, wherein the said interactive selection means (8) is a barcode scanner.

12. System (1) for providing interactive multimedia services according to either claim 9 or claim 10, wherein the said interactive selection means (8) is a multilingual keyboard or a button or an RFID code reader.

13. System (1) for providing interactive multimedia services according to any one of claims 10 to 12, comprising a first executable programme (10) that can be directly downloaded into the memory of the said at least one terminal (3) operating in client mode including a software code module for interactive selection from the said second database (9).

14. System (1) for providing interactive multimedia services according to any one of claims 10 to 13, comprising a first executable programme (10) that can be directly downloaded into the memory of the said at least one terminal operating in client mode (3) including a software code module for receiving and decoding the said pre-programmed flow (4) of data.

15. System for providing interactive multimedia services according to any one of claims 10 to 14, comprising a first executable programme (10) that can be directly downloaded into the memory of the said at least one terminal operating in client mode (3) including a software code module for updating the said second database (9).

16. System for providing interactive multimedia services according to any one of claims 10 to 15, comprising a second executable programme (11) that can be directly downloaded into the memory of the said terminal operating in server mode (2) including a software code module for selecting and transmitting to the said at least one client terminal (3) data to update the said second database (9).

17. System for providing interactive multimedia services according to any one of claims 10 to 16, wherein the said video terminal operating in server mode (2) comprises a connector (16) for acquiring multimedia data from external devices (6).

18. System for providing interactive multimedia services according to any one of claims 10 to 17, comprising a second executable programme (11) that can be directly downloaded into the memory of the said video terminal operating in server mode (2) including a software code module for selecting and transmitting the said pre-programmed flow (4) of data, by extraction from the said first database (5) stored in the internal memory of the said server video terminal (2).
